# EUROPÄISCHE PATENTSCHRIFT

(11) **EP 4 056 335 B1**
(45) Veröffentlichungstag und Bekanntmachung des Hinweises auf die Patenterteilung: **23.04.2025**
(21) Anmeldenummer: 22159719.8
(22) Anmeldetag: 02.03.2022
(51) Int. Cl.: B25J 15/04, B25J 19/00

(54) **VORRICHTUNG MIT ÜBER EINE VERBINDUNGSSCHNITTSTELLE VERBUNDENEN BAUTEILEN UND VERFAHREN ZUR VERBINDUNG VON BAUTEILEN**
DEVICE WITH COMPONENTS CONNECTED VIA A CONNECTION INTERFACE AND METHOD FOR CONNECTING COMPONENTS
DISPOSITIF POURVU DE COMPOSANTS CONNECTÉS PAR L'INTERMÉDIAIRE D'UNE INTERFACE DE CONNEXION ET PROCÉDÉ DE CONNEXION DE COMPOSANTS

(30) Priorität: 04.03.2021 DE 102021105255
(43) Veröffentlichungstag der Anmeldung: 14.09.2022
(73) Patentinhaber: Afag Holding AG, 6144 Zell (CH)
(72) Erfinder: Durand, Friedrich, 4522 Rüttenen (CH); Frasch, Tobias, 78052 VS-Tannheim (DE); Zimmermann, Timo, 73240 Wendlingen (DE); Hoos, Johannes, 73734 Esslingen (DE); Trick, Markus, 70327 Stuttgart (DE)
(74) Vertreter: Lindner Blaumeier Patent- und Rechtsanwälte

(56) Entgegenhaltungen:
- DE-A1- 2 359 195
- US-A1- 2015 328 655
- US-A1- 2018 333 867
- US-B2- 8 601 667

## Beschreibung

Die Erfindung betrifft eine Vorrichtung, insbesondere zur Handhabung und/oder Verarbeitung von Teilen, mit einem ersten und einem zweiten Bauteil, die über eine Verbindungsschnittstelle trennbar verbunden oder verbindbar sind, wobei die Verbindungsschnittstelle durch ein Anstecken und/oder Anpressen eines ersten Kontaktabschnitts des ersten Bauteils in eine Verbindungsrichtung an einen zweiten Kontaktabschnitt des zweiten Bauteils mit einer bezüglich des zweiten Kontaktabschnitts vorgegebenen ersten Orientierung resultiert, wobei die Verbindungsschnittstelle einerseits eine elektrische Schnittstelle zur Übertragung elektrischer Leistung und/oder von Kommunikationssignalen zwischen dem ersten und dem zweiten Bauteil und andererseits eine Fluidschnittstelle zum Fluidtransport zwischen dem ersten und dem zweiten Bauteil umfasst. Daneben betrifft die Erfindung ein Verfahren zur Verbindung eines ersten Bauteils mit einem zweiten Bauteil in einer Vorrichtung.

Vorrichtungen zur Handhabung und/oder Verarbeitung von Teilen, beispielsweise im Bereich der Robotik, von Handhabungssystemen oder allgemein der Automatisierung, sind häufig modular aus mehreren Komponenten aufgebaut, wobei insbesondere aktorisch betriebene Komponenten, wie beispielsweise Schlitten, Schwenkkomponenten, Greifkomponenten, Manipulatoren etc., als separate Komponenten an einen Grundkörper, Tragarme oder Ähnliches angebracht werden. Nach der Montage entsprechender Komponenten können elektrische Verbindungen und fluidische Verbindungen über entsprechende Anschlusskabel bzw. -schläuche verbunden werden. Hierdurch kann die Montage entsprechender Vorrichtungen bzw. ein Wechsel von entsprechenden Komponenten relativ aufwändig sein.

Um einen schnelleren Wechsel von Werkzeugen zu ermöglichen, ist es aus dem Bereich der Robotik bekannt, Schnellverbinder zu nutzen, die eine mechanische Befestigung eines Werkzeugs an einem Roboterarm ermöglichen und die Durchführungen für elektrische Kontakte und Druckluft aufweisen, so dass mit dem Herstellen der mechanischen Verbindung auch die elektrische und fluidische Verbindung erfolgt. Somit wird durch einen solchen Schnellverbinder einerseits eine feste Position und Orientierung für das Werkzeug vorgegeben und es erfolgt andererseits die elektrische und fluidische Kontaktierung.

DE 23 59 195 A1 offenbart eine Vorrichtung gemäß dem Oberbegriff des Anspruchs 1.

Vorrichtungen zur Handhabung bzw. Verarbeitung von Teilen werden, insbesondere in Industrieanwendungen, typischerweise auf die spezifischen Erfordernisse des Anwendungsfalls ausgelegt, also beispielsweise an einen vorhandenen Bauraum und an anderen am Prozess beteiligte Vorrichtungen angepasst. Bei entsprechenden Vorrichtungen handelt es sich somit häufig um Einzelstücke bzw. sie werden in relativ kleinen Stückzahlen hergestellt. Um dies mit vertretbarem Aufwand zu ermöglichen, werden beim Aufbau einer solchen Vorrichtung zumindest weitgehend vorgefertigte Module verwendet und durch eine geeignete Anordnung bzw. Ausrichtung dieser Module zueinander wird der gewünschte Aufbau erreicht. Hierbei könnte die Nutzung des obig beschriebenen Schnellverbindungssystems zwar Montage- und Wartungszeiten reduzieren, es wäre hierbei jedoch die Flexibilität bezüglich der Anordnung der verschiedenen Module zueinander erheblich eingeschränkt. Soll ein solcher Verbindungsansatz somit ohne allzu starke Einschränkungen der Flexibilität bezüglich des Aufbaus der Vorrichtung genutzt werden, müssen im Modulsystem zahlreiche Varianten von im Wesentlichen funktionsgleichen Modulen für verschiedene Positionierungen bzw. Orientierungen vorhanden sein oder es müssen unter Umständen relativ viele anwendungsspezifische Module konstruiert werden. Hieraus ergeben sich diverse Nachteile, insbesondere höhere Kosten und längere Lieferzeiten bzw. Planungszeiten zum Aufbau neuer Vorrichtungen.

Der Erfindung liegt somit die Aufgabe zugrunde, eine Möglichkeit anzugeben, einzelne Module bzw. Bauteile flexibel in verschiedenen Vorrichtungen einsetzen zu können und dennoch eine einfache Montage bzw. einen einfachen Wechsel dieser Module bzw. Bauteile zu erreichen.

Die Aufgabe wird erfindungsgemäß durch eine Vorrichtung der eingangs genannten Art gelöst, wobei der erste und zweite Kontaktabschnitt derart ausgebildet sind, dass auch bei einem Anstecken oder Anpassen des ersten Kontaktabschnitts in die Verbindungsrichtung an den zweiten Kontaktabschnitt mit wenigstens einer weiteren Orientierung die Verbindungsschnittstelle resultiert, wobei die jeweilige weitere Orientierung abgesehen von einer Rotation des ersten Kontaktabschnitts um eine in Verbindungsrichtung verlaufende Rotationsachse um einen jeweiligen vorgegebenen Winkel der ersten Orientierung entspricht. Anders ausgedrückt kann in der erfindungsgemäßen Vorrichtung erreicht werden, dass bei einem Anstecken bzw. Anpressen des ersten Bauteils an das zweite Bauteil in mehreren diskreten Orientierungen jeweils sowohl ein Fluidtransport über die Fluidschnittstelle als auch eine Leistungs- und/oder Kommunikationssignalübertragung über die elektrische Schnittstelle ermöglicht werden. Details zur Implementierung einer solche Verbindungsschnittstelle werden später noch erläutert. Allgemein kann der erste Kontaktabschnitt durch das erste Bauteil gebildet oder an diesem, insbesondere starr, angebracht sein. Entsprechend kann der zweite Kontaktabschnitt durch das zweite Bauteil gebildet oder an diesem, insbesondere starr, angebracht sein. Durch Wahl der unterschiedlichen Orientierungen der Kontaktabschnitte zueinander resultieren somit insbesondere auch unterschiedliche Orientierungen der Bauteile zueinander, womit durch Wahl einer anderen Orientierung die Komponenten des ersten Bauteils bezüglich des zweiten Bauteils und den vorgegebenen Winkel verschwenkt bzw. rotiert werden können.

Die Rotationsachse ist hierbei typischerweise ausschließlich eine geometrische Achse, das heißt sie wird nicht durch eine mechanische Welle oder eine drehbare Lagerung der Bauteile aneinander definiert. Sie ist, wie später noch im Detail erläutert wird, durch die Geometrie jener Komponenten vorgegeben, die die Verbindungsschnittstelle implementieren, insbesondere durch eine Drehsymmetrie dieser Komponenten bezüglich der Rotationsachse.

Durch die Möglichkeit, verschiedene mögliche Orientierungen des ersten Kontaktabschnitts bezüglich des zweiten Kontaktabschnitts und somit insbesondere des ersten Bauteils bezüglich des zweiten Bauteils zu wählen, wird erreicht, dass gegebene Bauteile durch entsprechende Wahl ihrer Orientierung zueinander an die Erfordernisse der Vorrichtung bzw. des Nutzers der Vorrichtung angepasst werden können. Beispielsweise können hierdurch mit gleichen Bauteilen unterschiedliche Bewegungsrichtungen einer Komponente des ersten Bauteils bezüglich des zweiten Bauteils implementiert werden, Arbeitsflächen, Greifern und Ähnliches können unterschiedlich ausgerichtet oder positioniert werden, etc.

Ein Anstecken des ersten Bauteils an das zweite Bauteil kann insbesondere dadurch implementiert werden, dass für die elektrische Schnittstelle eine Stecker-Buchse-Verbindung genutzt wird, also dass beispielsweise beim Anstecken ein jeweiliger Stecker des ersten Kontaktabschnitts in eine jeweilige Buchse des zweiten Kontaktabschnitts eingeführt wird oder umgekehrt. Es ist aber auch möglich, dass am ersten Kontaktabschnitt eine Mischung von Buchsen und Steckern vorgesehen ist, die mit einer entsprechenden gegengleichen Mischung von Steckern und Buchsen des zweiten Kontaktabschnitts zusammenwirkt.

Eine Abdichtung der Fluidschnittstelle bzw. einzelner Fluidkanäle der Fluidschnittstelle kann insbesondere dadurch erfolgen, dass einer der Kontaktabschnitte an ein durch den anderen Kontaktabschnitt getragenes Dichtelement angepresst wird oder dass zwei durch den jeweiligen Kontaktabschnitt getragene Dichtelemente aneinandergepresst werden.

Der bzw. die vorgegebenen Winkel bzw. Unterschiede zwischen mehreren vorgegebenen Winkeln können beispielsweise zwischen 10° und 180° sein. Insbesondere können alle vorgegebenen Winkel ein ganzzahliges Vielfaches von einem ersten vorgegebenen Winkel sein, der sich insbesondere ergibt, indem ein Winkel von 360° durch eine ganzzahlige Anzahl der möglichen Orientierungen geteilt wird. Die Orientierungen können somit gleichmäßig verteilt sein, beispielsweise indem eine n-zahlige Drehsymmetrie für die die Verbindungsschnittstelle bildenden Komponenten genutzt wird, wobei n die Anzahl der möglichen Orientierungen ist.

Insbesondere kann die Verbindungsschnittstelle auch für zwei weitere Orientierungen oder drei weitere Orientierungen oder mehr als drei weitere Orientierungen ausgebildet werden, was insbesondere durch eine n-zahlige Drehsymmetrie der die Verbindungsschnittstelle ausbildenden Komponenten mit n = 3, n = 4 oder n > 4 erreicht werden kann. Dies ermöglicht es, die Orientierung des ersten und zweiten Kontaktabschnitts, und somit insbesondere der Bauteile, zueinander, beispielsweise in 120°-Schritten, 90°-Schritten oder kleineren Schritten bedarfsgerecht zu wählen.

Der erste und zweite Kontaktabschnitt werden durch ein Befestigungsmittel, das an einem der Bauteile bzw. der Kontaktabschnitte angebracht oder separat von den Kontaktabschnitten bzw. Bauteilen ausgebildet ist, aneinander gehaltert bzw. aufeinander gepresst. Dies wird später noch genauer erläutert.

Das Fluid kann beispielsweise Luft, insbesondere für eine pneumatische Verbindung bzw. Druckluftverbindung, jedoch auch ein anderes Gas oder eine Flüssigkeit sein. Die erfindungsgemäße Vorrichtung kann beispielsweise im Bereich der Robotik, der Handhabungssysteme oder allgemein der Automatisierung genutzt werden. Konkret kann eines der Bauteile, insbesondere das erste Bauteil, einen, insbesondere pneumatisch bewegten, Schlitten, eine Schwenkkomponente, eine Greifkomponente und/oder einen Manipulator implementieren.

Die elektrische Schnittstelle kann seitens des ersten und zweiten Kontaktabschnitts jeweils durch eine Gruppe von mehreren elektrischen Anschlüssen gebildet sein, wobei an dem ersten und/oder zweiten Kontaktabschnitt für jeden der Anschlüsse der Gruppe mehrere Instanzen vorhanden sind, wobei die Instanzen eines jeweiligen Anschlusses leitend miteinander verbunden sind und im verbundenen Zustand der Kontaktabschnitte beabstandet voneinander auf einer jeweiligen Kreisbahn um die Rotationsachse angeordnet sind. Hierdurch kann erreicht werden, dass für mehrere Orientierungen der Kontaktabschnitte zueinander für jeden der elektrischen Anschlüsse des ersten Kontaktabschnitts eine jeweilige Instanz dieses Anschlusses eine jeweilige Instanz des zugeordneten Anschlusses am zweiten Kontaktabschnitt kontaktiert und somit für die verschiedenen Orientierungen jeweils die gleiche elektrische Schnittstelle ausgebildet wird.

Alternativ könnte dieses Ergebnis beispielsweise auch erreicht werden, wenn sich die elektrischen Anschlüsse des jeweiligen Kontaktabschnitts ringartig über den gesamten Umfang oder zumindest über ein gewisses Winkelsegment des jeweiligen Kontaktabschnitts erstrecken. Dies würde jedoch dazu führen, dass großflächige elektrische Anschlüsse genutzt werden müssen, womit die Bereitstellung der elektrischen Anschlüsse aufwändiger ist und unter Umständen auch ein größerer Bauraumverbrauch resultiert.

Vorzugsweise kann eine zweite Instanz alle Anschlüsse gegenüber der jeweiligen ersten Instanz entlang der jeweiligen Kreisbahn um einen vorgegebenen Winkel versetzt sein. Eine weitere Instanz kann gegenüber dieser Instanz erneut um den vorgegebenen Winkel versetzt sein usw. Insbesondere können die verschiedenen Instanzen des jeweiligen elektrischen Anschlusses in Umfangsrichtung um die Rotationsachse gleichmäßig voneinander beabstandet sein. Insbesondere kann die Gesamtmenge der Instanzen aller elektrischen Anschlüsse des jeweiligen Kontaktabschnitts eine n-zahlige Drehsymmetrie aufweisen.

Die Anschlüsse können als einzelne Pins, Federkontakte oder Ähnliches ausgeführt sein. Vorzugsweise wird die Gruppe der elektrischen Anschlüsse jedoch zumindest zum Teil in einem gemeinsamen Stecker oder einer gemeinsamen Buchse zusammengefasst. Der entsprechende Stecker oder die entsprechende Buchse könnte dann mehrfach in Umfangsrichtung der Rotationsachse voneinander beabstandet vorhanden sein, um die verschiedenen Instanzen der elektrischen Anschlüsse bereitzustellen. Dies kann auch als Bereitstellung mehrerer Instanzen der Gruppe der elektrischen Anschlüsse betrachtet werden, wobei die jeweilige Instanz der Gruppen insbesondere als Stecker oder Buchse ausgebildet sein kann.

Die Fluidschnittstelle kann wenigstens einen Fluidkanal umfassen, der durch eine fluiddichte Verbindung eines jeweiligen ersten Teilkanals des ersten Kontaktabschnitts und eines jeweiligen zweiten Teilkanals des zweiten Kontaktabschnitts gebildet ist, wobei zumindest im Bereich der fluiddichten Verbindung der Fluidkanal oder wenigstens einer der Fluidkanäle im Querschnitt senkrecht zur Verbindungsrichtung betrachtet die Rotationsachse ringförmig umgibt und/oder wobei die Rotationsachse innerhalb des Fluidkanals oder eines der Fluidkanäle verläuft. Die beschriebene Ausgestaltung ermöglicht es, die Teilkanäle unabhängig von einer relativen Orientierung des ersten und zweiten Kontaktabschnitts bezüglich einer Rotation um die Rotationsachse fluiddicht miteinander zu verbinden. Die entsprechende Ausgestaltung kann im einfachsten Fall dadurch erreicht werden, dass ein O-Ring zur Abdichtung an dem ersten oder zweiten Kontaktabschnitt angeordnet ist, der bei dem Anstecken bzw. Anpressen des ersten Kontaktabschnitts an den zweiten Kontaktabschnitt die Öffnungen der Teilkanäle der Kontaktabschnitte übergreift. Bevorzugt ist jedoch der gesamte Fluidkanal bzw. zumindest ein die fluiddichte Verbindung umfassender Längsabschnitte des Fluidkanals ringförmig oder rund.

Alternativ zu der beschriebenen Ausgestaltung des Fluidkanals bzw. der Fluidkanäle können für jeden Fluidkanal mehrere Instanzen vorgesehen sein, die entlang einer Kreisbahn in Umfangsrichtung der Rotationsachse verteilt angeordnet sind, wie dies obig bezüglich der verschiedenen Instanzen der elektrischen Anschlüsse erläutert wurde. Dies ist jedoch in der Regel bauraumintensiv und erfordert eine aufwändigere Abdichtung. Somit wird bevorzugt die obig erläuterte Ausgestaltung genutzt.

Die Fluidschnittstelle kann mehrere, insbesondere zwei, der Fluidkanäle umfassen, wobei die Fluidkanäle zumindest im Bereich der fluiddichten Verbindung senkrecht zur Verbindungsrichtung betrachtet die Rotationsachse als koaxiale Ringe umgeben. Die zwei Fluidkanäle können insbesondere als Fluidzuführung und Fluidrückführung für das gleiche Fluid dienen. Während es beispielsweise bei einer Bereitstellung von Druckluft über die Fluidschnittstelle ausreichend sein kann, ausschließlich Druckluft vom zweiten zum ersten Bauteil zu führen oder umgekehrt, beispielsweise um einen Aktor anzutreiben, da die Druckluft in die Umgebung entweichen kann, ist es für andere Fluide typischerweise notwendig bzw. kann es auch für Druckluft vorteilhaft sein, eine entsprechende Fluidrückführung vorzusehen.

Der erste und zweite Kontaktabschnitt sind durch ein Befestigungsmittel miteinander verbunden, das einen Grundkörper, der die Rotationsachse ringförmig umläuft, und jeweils mehrere von dem Grundkörper abstehende erste und/oder zweite Stege umfasst, wobei die ersten Stege jeweils einen Stützabschnitt des ersten Kontaktabschnitts übergreifen und an einer von dem zweiten Kontaktabschnitt abgewandten Stützfläche dieses Stützabschnitts angreifen und die zweiten Stege jeweils einen Stützabschnitt des zweiten Kontaktabschnitts übergreifen und an einer von dem ersten Kontaktabschnitt abgewandten Stützfläche dieses Stützabschnitts angreifen, um eine Auseinanderbewegung der Kontaktabschnitte in Verbindungsrichtung zu begrenzen. Durch Nutzung von ersten und zweiten Stegen kann eine Art Doppelkralle gebildet werden, die Stützabschnitte beider Kontaktabschnitte übergreift und somit die Kontaktabschnitte aufeinanderpressen bzw. aneinander haltern kann.

Das Befestigungsmittel kann an einem der Kontaktabschnitte angebracht sein, beispielsweise dort drehbar gelagert sein, oder als separate Komponente bereitgestellt sein. Durch die Ringform des Grundkörpers kann insbesondere eine Relativbewegung der Kontaktabschnitte senkrecht zur Verbindungsrichtung blockiert bzw. gegrenzt werden, womit durch geeignetes Anbringen des Befestigungsmittels eine Trennung der Kontaktabschnitte verhindert werden kann. Die ersten Stege bzw. die zweiten Stege können jeweils in Umfangsrichtung der Rotationsachse voneinander beabstandet sein, wobei vorzugsweise jeweils ein erster und ein zweiter Steg an gleicher Position in Umfangsrichtung angeordnet sind, was eine besonders gute Kraftführung über die Stege zu den jeweiligen Stützabschnitten ermöglichen kann.

Die Ausgestaltung der Stützabschnitte und des Befestigungsmittels können insbesondere derart aufeinander abgestimmt sein, dass sich das Befestigungsmittel in einer ersten Rotationsposition bezüglich der Rotationsachse, die als Befestigungsposition bezeichnet werden kann, in der beschriebenen Stellung befindet und somit die Kontaktabschnitte aufeinander haltert. Durch eine Rotation des Befestigungsmittels um die Rotationsachse in eine Freigabeposition können die Stege in Umfangsrichtung von den Stützabschnitten weggeführt werden, insbesondere wenn die Stützabschnitte in Umfangsrichtung voneinander beabstandet sind, womit eine Trennung der Kontaktabschnitte voneinander, beispielsweise durch ein Abziehen des ersten Kontaktabschnitts entgegen der Verbindungsrichtung, ermöglicht wird. Umgekehrt kann zum Verbinden der Kontaktabschnitte das Befestigungsmittel zunächst in der Freigabeposition angeordnet werden und nach dem Zusammenführen der Kontaktabschnitte in die Befestigungsposition verbracht werden, um die Kontaktabschnitte aneinander zu verriegeln.

Die jeweiligen Stützabschnitte des ersten und/oder des zweiten Kontaktabschnitts können in Umfangsrichtung der Rotationsachse voneinander beabstandet sein und/oder die Stützflächen der Stützabschnitte des ersten und/oder zweiten Kontaktabschnitts und/oder die die Stützflächen kontaktierenden Stegflächen der ersten und/oder zweiten Stege können in Umfangsrichtung angeschrägt sein.

Das Befestigungsmittel kann derart eingerichtet sein, dass durch eine Drehung des ringförmigen Grundkörpers um die Rotationsachse eine Anpresskraft, mit der die Kontaktabschnitte aufeinander gepresst werden, veränderbar ist und/oder dass durch diese Drehung einstellbar ist, ob und/oder nach einem wie großen Verstellweg entgegen der Verbindungsrichtung eine weitere Auseinanderbewegung der Kontaktabschnitte durch einen Anschlag der oder einer Stegfläche wenigstens eines der Stege an wenigstens einer der Stützflächen blockiert wird. Insbesondere kann die Beabstandung der Stützabschnitte in Umfangsrichtung größer sein als die Breite der Stegflächen, so dass die jeweilige Stegfläche bei einer Auseinanderbewegung der Kontaktabschnitte in einer entsprechenden Rotationsstellung des Befestigungsmittels, beispielsweise in der obig erläuterten Freigabeposition, zwischen benachbarten Stützabschnitten hindurchführbar ist, womit eine Blockierung der Auseinanderbewegung der Kontaktabschnitte in zumindest einer Rotationsstellung des Befestigungsmittels aufgehoben ist.

Eine Variation der Anpresskraft kann insbesondere durch die obig erwähnte Anschrägung der Stützflächen bzw. der Stegeflächen in Umfangsrichtung erreicht werden. Aufgrund der Anschrägung verläuft die entsprechende Stütz- bzw. Stegfläche gewinkelt zu einer Fläche, die senkrecht auf der Rotationsachse steht. Insbesondere können einander kontaktierende Stützflächen und Stegflächen entlang paralleler Schraubenlinien verlaufen, so dass durch eine Rotation des Befestigungsmittels um die Rotationsachse der Anpressdruck bzw. ein Spiel der Bewegungen der Kontaktabschnitte in Verbindungsrichtung variiert werden kann.

Zwischen den Kontaktabschnitten kann ein elastisch verformtes Rückstellelement angeordnet sein, das den ersten Kontaktabschnitt mit einer Rückstellkraft in Richtung von dem zweiten Kontaktabschnitt weg beaufschlagt. Das Rückstellelement kann insbesondere durch ein Dichtmittel gebildet werden, das zur Abdichtung der Fluidschnittstelle dient, beispielsweise durch einen O-Ring. Durch die Rückstellkraft kann ein versehentliches Lösen des Befestigungsmittels durch eine Rotation in die Freigabeposition verhindert werden, da ein jeweiliges Paar aus Steg- und Stützfläche durch die Rückstellkraft aufeinandergepresst werden und somit eine Rotation des Befestigungsmittels in die Freigabeposition durch einen Kraftschluss verhindert oder zumindest gehemmt ist. Zum Trennen der Kontaktabschnitte kann beispielsweise eine ausreichende Kraft aufgewendet werden, um diese Reibkraft zu überwinden. Besonders bevorzugt kann jedoch ein Aneinanderpressen der Kontaktabschnitte erfolgen, um das Rückstellelement weiter zu verformen und somit den Kraftschluss zwischen Stegfläche und Stützfläche aufzuheben oder zumindest merklich zu reduzieren.

Ergänzend oder alternativ zu dem beschriebenen Kraftschluss kann das Befestigungsmittel in der Befestigungsposition einrasten, beispielsweise indem an wenigstens einem der Stege oder wenigstens einem der Stützabschnitte ein Rastelement, beispielsweise eine Rastnase, vorgesehen ist. Ein Verbringen in die Freigabeposition kann in diesem Fall beispielsweise erst nach Lösen der Rastverbindung möglich sein.

Die Halterung der Kontaktabschnitte aneinander und die Festlegung ihrer relativen Position und Orientierung kann ausschließlich durch das Befestigungsmittel und somit beispielsweise ausschließlich durch einen Kraftschluss erfolgen. Um jedoch einerseits eine möglichst exakte Ausrichtung und Positionierung der Kontaktabschnitte zueinander im Rahmen von deren Verbindung zu erreichen und/oder andererseits die Kontaktabschnitte aneinander abzustützen, kann eine zusätzliche Abstützung bzw. Führung gewünscht sein. Diese kann z.B. Drehmomente um die Rotationsachse und/oder Kräften senkrecht zur Rotationsachse aufnehmen, die ohne diese Abstützung bzw. Führung, also z.B. bei einer rein kraftschlüssigen Halterung der Kontaktabschnitte aneinander, zu einer Änderung der Relativposition der Kontaktabschnitte und/oder zu einer mechanischen Belastung der elektrischen Schnittstelle, insbesondere von Stecken und/oder Buchsen, und/oder der Fluidschnittstelle führen könnten.

Daher kann es vorteilhaft sein, wenn der erste und/oder der zweite Kontaktabschnitt mehrere Ausnehmungen aufweisen, in die jeweils, zumindest in der und/oder der weiteren Orientierung, ein jeweiliger, insbesondere stiftartiger, Vorsprung des jeweils anderen Kontaktabschnitts eingreift, der sich parallel zur Rotationsachse erstreckt. Die Ausnehmungen und insbesondere die Vorsprünge können in Umfangsrichtung um die Rotationsachse derart voneinander beabstandet sein, dass die gleiche Drehsymmetrie resultiert wie für die die Schnittstelle bildenden Komponenten. Anders ausgedrückt kann in jeder Orientierung, in der die Kontaktabschnitte miteinander verbindbar sind, der jeweilige Vorsprung in einer der Ausnehmungen aufgenommen werden.

Durch die Nutzung eines einzigen Vorsprungs können bereits Kräfte senkrecht zur Rotationachse aufgenommen werden. Vorzugsweise werden jedoch zumindest zwei Vorsprünge genutzt, um einerseits Drehmomente um die Rotationsachse aufnehmen zu können und andererseits eine robuste Zentrierung der Kontaktabschnitte bezüglich der Rotationsachse zu erreichen. Zu den genannten Zwecken ist es zudem vorteilhaft, wenn die Vorsprünge bzw. Ausnehmungen relativ weit voneinander beabstandet sind, also wenn sich z.B. zwei Vorsprünge bezüglich der Rotationsachse gegenüberliegen und in hinreichend großem Abstand von der Rotationsachse angeordnet sind.

Wenigstens eines der Bauteile kann einen Aktor umfassen, der dazu eingerichtet ist, eine bezüglich des Kontaktabschnitts dieses Bauteils beweglich gelagerte Komponente zu bewegen, wobei eine Richtung der Bewegung und/oder einer Dreh- oder Schwenkachse der Bewegung und/oder ein Bewegungspfad der Komponente davon abhängt, ob der erste Kontaktabschnitt mit der oder der weiteren Orientierung an den zweiten Kontaktabschnitt abgesteckt und/oder angepresst ist. Insbesondere kann die beweglich gelagerte Komponente an einer feststehenden Komponente gelagert sein oder die feststehende Komponente kann den Aktor tragen und die feststehende Komponente kann starr mit dem Kontaktabschnitt dieses Bauteils verbunden sein.

Außer dem Fall einer linearen Bewegung der beweglich gelagerten Komponente entlang der Rotationsachse resultiert aus einer Änderung der Orientierung stets eine der genannten Effekte. Ist die bewegte Komponente beispielsweise ein Schlitten, der durch den Aktor linear gewinkelt zur Verbindungsrichtung verschoben wird, kann durch geeignete Wahl der Orientierung eine Bewegungsrichtung gewählt werden. Auch in Fällen, in denen der Bewegungspfad parallel zur Rotationsachse verläuft, kann der Bewegungspfad angepasst werden, da beispielsweise eine Bewegung oberhalb, unterhalb oder seitlich der Rotationsachse durch Wahl einer geeigneten Orientierung bezüglich der Rotationsachse ausgewählt werden kann. Unterschiedliche Bewegungspfade resultieren beispielsweise auch, wenn eine Dreh- oder Schwenkachse in den verschiedenen Orientierungen jeweils bezüglich der Rotationsachse parallel versetzt ist, wobei die Richtung der Versetzung offensichtlich von der Orientierung abhängt. Ist die Dreh- oder Schwenkachse hingegen gewinkelt zur Rotationsachse, führt ein Orientierungswechsel zu einer Veränderung der Richtung der Dreh- oder Schwenkachse. Insgesamt wird somit durch die Ermöglichung verschiedener Orientierungen der Kontaktabschnitte zueinander eine hohe Flexibilität bezüglich der möglichen Bewegungspfade der beweglich gelagerten Komponente erreicht, so dass ein gleiches erstes und/oder zweites Bauteil flexiblen in verschieden gestalteten Vorrichtungen genutzt werden können und durch geeignete Wahl der Orientierung an die dortigen Erfordernisse angepasst werden können.

Das den Aktor umfassende Bauteil kann insbesondere das erste Bauteil sein, das beispielsweise ein Werkzeug oder eine andere Aktorik bildet, die an einem zweiten Bauteil angebracht ist bzw. wird, das beispielsweise ein Grundkörper der Vorrichtung sein kann oder zur Verbindung des ersten Bauteils mit einem solchen Grundkörper dienen kann.

Der Aktor kann ein pneumatischer oder hydraulischer Aktor sein oder wenigstens eines der Bauteile kann einen pneumatischen oder hydraulischen Aktor umfassen, wobei die Vorrichtung derart eingerichtet sein kann, dass zum Betrieb des pneumatischen oder hydraulischen Aktors genutztes Betriebsfluid über die Fluidverbindung zu diesem Bauteil geführt und/oder von diesem Bauteil abgeführt wird.

Alternativ kann der Aktor ein elektrischer Antrieb sein oder wenigstens eines der Bauteile kann einen elektrischen Antrieb als Aktor umfassen. In diesem Fall kann der Aktor durch elektrische Energie bzw. Leistung angetrieben werden, die über die elektrische Schnittstelle zu dem den Aktor umfassenden Bauteil geführt wird.

Wenigstens eines der Bauteile kann den oder einen Aktor umfassen, wobei die Vorrichtung derart eingerichtet ist, dass Steuersignale zur Steuerung des Aktors als Kommunikationssignale und/oder Leistungen zum Betrieb des Aktors, insbesondere zum Betrieb eines als Aktor genutzten elektrischen Antriebs, über die elektrische Schnittstelle zu diesem Bauteil übertragbar sind. Im einfachsten Fall kann eine unmittelbare Ansteuerung des Aktors durch Steuersignale, die von dem anderen Bauteil aus über die elektrische Schnittstelle ausgegeben werden, erfolgen. Bevorzugt umfasst das den Aktor umfassende Bauteil jedoch eine Steuereinrichtung, die insbesondere über die elektrische Schnittstelle bestromt ist, die die Kommunikationssignale bzw. Steuersignale zur Steuerung des Aktors empfängt und den Betrieb des Aktors entsprechend steuert. Hierdurch müssen zur Generierung der Kommunikations- bzw. Steuersignale die konkreten Eigenschaften des Aktors selbst nicht bekannt sein und es können beispielsweise abstrakte Befehle als Kommunikationssignale übertragen werden.

Bei den Steuersignalen kann es sich auch um Steuersignale für einen pneumatischen bzw. hydraulischen Aktor handeln. Hierbei können in Abhängigkeit der Steuersignale beispielsweise Ventile, Drosseln, etc. durch die Steuereinrichtung angesteuert werden. So ist es beispielsweise möglich, dass über die Fluidverbindung ein Arbeitsfluid mit einem im Wesentlichen konstanten Druck bereitgestellt wird, wonach die konkrete Druckbeaufschlagung des Aktors in Abhängigkeit von Steuersignalen erfolgt, die über die elektrische Schnittstelle übertragen werden. Es kann sich jedoch alternativ auch um Steuersignale für einen als Aktor genutzten elektrischen Antrieb handeln.

Ergänzend oder alternativ kann die elektrische Schnittstelle auch dazu dienen, Sensordaten oder allgemeine Betriebsinformationen zwischen den Bauteilen zu übertragen.

In einer bevorzugten Ausgestaltung der Vorrichtung ist ein Bus oder ein Netzwerk über die elektrische Schnittstelle geführt. Insbesondere kann eine relativ breitbandige Datenverbindung erfolgen, beispielsweise mit einer Datenrate von wenigstens 1 MBit/s. Beispielsweise kann eine Ethernet-Verbindung über die elektrische Schnittstelle geführt sein, wobei mit an sich bekannten Ethernet-Verbindungen beispielsweise auch Datenraten von z.B. 100 Mbit/s erreicht werden können oder auch Gigabit-Ethernet genutzt werden kann.

Bei einer Führung eines Buses oder eines Netzwerkes über die elektrische Schnittstelle können Steuereinrichtungen, Aktoren, Sensoren, etc. Adressen in dem Bus bzw. dem Netzwerk zugeordnet werden, beispielsweise MAC-Adressen, IP-Adressen oder Ähnliches. Durch an sich bekannte Netz- bzw. Busfunktionen kann beispielsweise eine dynamischer Adressvergabe implementiert werden und/oder es können Discovery-Funktionen bereitgestellt werden, über die eine zentrale Steuereinrichtung der Vorrichtung ein über die jeweilige Verbindungsschnittstelle angeschlossenes Bauteil bzw. dort vorhandene Komponenten, z.B. einen Aktor und/oder eine Steuereinrichtung, erkennen kann.

Neben der erfindungsgemäßen Vorrichtung betrifft die Erfindung ein Verfahren zur Verbindung eines ersten Bauteils mit einem zweiten Bauteil in einer Vorrichtung, insbesondere in einer Vorrichtung zur Handhabung und/oder Verarbeitung von Teilen, wobei das erste und zweite Bauteil über eine Verbindungsschnittstelle verbunden werden, indem ein erster Kontaktabschnitt des ersten Bauteils in eine Verbindungsrichtung an einem zweiten Kontaktabschnitt des zweiten Bauteils mit einer bezüglich des zweiten Kontaktabschnitts vorgegebenen Orientierung angesteckt und/oder angepresst wird, wobei die Verbindungsschnittstelle einerseits eine elektrische Schnittstelle zur Übertragung elektrischer Leistung und/oder von Kommunikationssignalen zwischen dem ersten und dem zweiten Bauteil und andererseits eine Fluidschnittstelle zum Fluidtransport zwischen dem ersten und dem zweiten Bauteil umfasst, wobei ein erster und zweiter Kontaktabschnitt verwendet werden, die derart ausgebildet sind, dass für mehrere mögliche Orientierungen des ersten Kontaktabschnitts bezüglich des zweiten Kontaktabschnitts, die sich ausschließlich bezüglich einer Rotation des ersten Kontaktabschnitts um eine in Verbindungsrichtung verlaufende Rotationsachse um einen vorgegebenen Winkel voneinander unterscheiden, bei einem Anstecken oder Anpassen des ersten Kontaktabschnitts in die Verbindungsrichtung an den zweiten Kontaktabschnitt in der jeweiligen möglichen Orientierung die Verbindungsschnittstelle resultiert, wobei eine der möglichen Orientierungen als die vorgegebene Orientierung verwendet wird.

Als Vorrichtung kann insbesondere die erfindungsgemäße Vorrichtung genutzt werden. Unabhängig davon können zur erfindungsgemäßen Vorrichtung erläuterte Merkmale mit den dort genannten Vorteilen auf das erfindungsgemäße Verfahren bzw. auf eine im erfindungsgemäßen Verfahren verwendete Vorrichtung übertragen werden und umgekehrt.

Die Kontaktabschnitte werden durch ein Befestigungsmittel aneinander befestigt, das einen Grundkörper, der die Rotationsachse ringförmig umläuft, und jeweils mehrere von dem Grundkörper abstehende erste und/oder zweite Stege umfasst, wobei die Befestigung durch eine Rotation des Befestigungsmittels aus einer Freigabeposition in eine Befestigungsposition erfolgt, wobei in der Befestigungsposition die ersten Stege jeweils einen Stützabschnitt des ersten Kontaktabschnitts übergreifen und eine jeweilige Stegfläche des jeweiligen ersten Stegs an einer von dem zweiten Kontaktabschnitt abgewandten Stützfläche dieses Stützabschnitts angreift und die zweiten Stege jeweils einen Stützabschnitt des zweiten Kontaktabschnitts übergreifen und eine jeweilige Stegfläche des jeweiligen zweiten Stegs an einer von dem ersten Kontaktabschnitt abgewandten Stützfläche dieses Stützabschnitts angreift, wobei die jeweiligen Stützabschnitte des ersten und/oder des zweiten Kontaktabschnitts in Umfangsrichtung der Rotationsachse durch Zwischenräume voneinander beabstandet sind, wobei in der Freigabeposition die Stegflächen der ersten und/oder der zweiten Stege senkrecht zur Rotationsachse betrachtet in den Zwischenräumen angeordnet sind. Weitere Details zu möglichen Ausgestaltungen eines solchen Befestigungsmittels und von dessen Nutzung wurden bereits vorangehend mit Bezug auf die erfindungsgemäße Vorrichtung erläutert.

Bei dem Anstecken oder Anpressen des ersten Kontaktabschnitts in die Verbindungsrichtung an den zweiten Kontaktabschnitt kann die jeweilige Stegfläche durch einen jeweiligen der Zwischenräume geführt werden. Wie bereits zur erfindungsgemäßen Vorrichtung erläutert, kann das Befestigungsmittel zunächst eine Freigabeposition angeordnet werden, die Kontaktabschnitte können dann in Verbindungsrichtung zusammengeführt werden und anschließend kann das Befestigungsmittel rotiert werden, um die Kontaktabschnitte in ihrer aneinandergepressten bzw. aneinandergesteckten Position zu fixieren.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel einer erfindungsgemäßen Vorrichtung mit einem ersten und zweiten Bauteil, die gemäß eines Ausführungsbeispiels des erfindungsgemäßen Verfahrens verbunden sind,
- Fig. 2: eine Detailansicht der Kontaktabschnitte der in Fig. 1 gezeigten Bauteile, die eine Verbindungsschnittstelle implementieren,
- Fig. 3+4: Draufsichten auf die in Fig. 1 und 2 gezeigten Kontaktabschnitte, und
- Fig. 5: eine perspektivische Ansicht des in Fig. 2 dargestellten, zur Halterung der Kontaktabschnitte aneinander genutzten Befestigungsmittels.

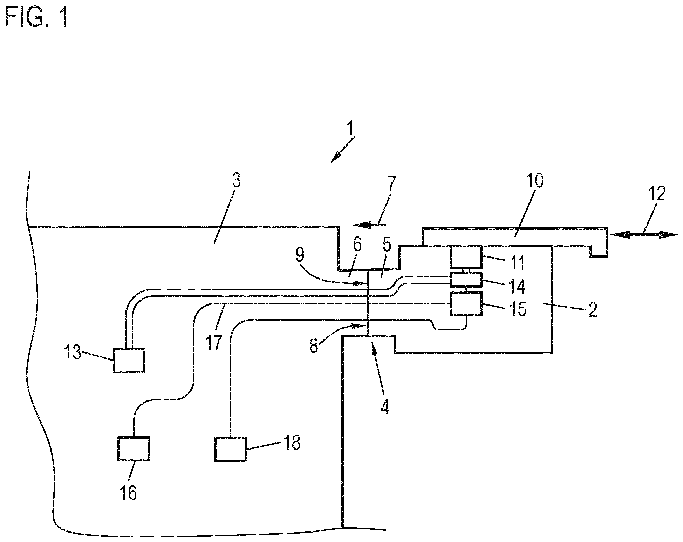

Fig. 1 zeigt eine Detailansicht einer Vorrichtung 1, in der zwei Bauteile 2, 3 dieser Vorrichtung gezeigt sind. Die Vorrichtung 1 kann insbesondere zur Handhabung bzw. zur Verarbeitung von Teilen in einem Produktionsprozess dienen. Im gezeigten Beispiel ist das Bauteil 2 ein Modul, das einen aktorisch bewegten Schlitten implementiert. Das Bauteil 3 ist durch einen Grundkörper gebildet, an dem neben dem Bauteil 2 auch andere Bauteile angebracht sein können. In einer nicht gezeigten Abwandlung wäre es auch möglich, mehrere verschiedene Bauteile der Vorrichtung 1 in Serien zu verbinden, so dass beispielsweise das Bauteil 3 wiederum durch ein weiteres Bauteil getragen werden könnte.

Der Aufbau der Vorrichtung 1 durch mehrere trennbar verbundene Bauteile 2, 3 ermöglicht es, die Vorrichtung 1 modular aufzubauen, womit mit einem relativ begrenzten Modulvorrat die Vorrichtung 1 bedarfsgerecht an verschiedene Anwendungszwecke angepasst werden kann. Beispielsweise könnte statt dem Bauteil 2 ein anderes Bauteil genutzt werden, das einen Greifer oder eine aktorisch angetriebene Schwenkmechanik implementiert.

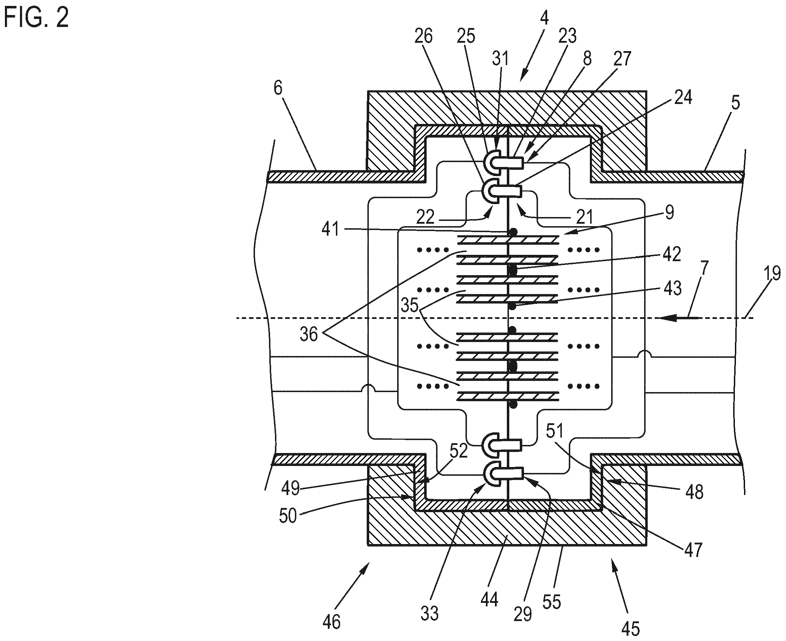

Wie später noch genauer erläutert werden wird, sind die Kontaktabschnitte 5, 6, über die die Bauteile 2, 3 miteinander verbunden sind, derart ausgestaltet, dass das Bauteil 2 in mehreren Orientierungen an dem Bauteil 3 angebracht werden kann, die sich bezüglich einer Rotation des Bauteils 2 um eine in Querrichtung in Fig. 1 verlaufende Rotationsachse unterscheiden. Wie im Folgenden noch mit Bezug auf die Figuren 2 bis 4 genauer erläutert werden wird, sind hierbei beispielsweise vier diskrete Orientierungen möglich, die sich um einen Drehwinkel von 90° unterscheiden. Während somit das Bauteil 2 in Fig. 1 derart am Bauteil 3 angebracht ist, das eine aktorisch bewegte Komponente 10, im Beispiel ein Schlitten, an der Oberseite des Bauteils 2 angeordnet ist, kann durch Änderung der Orientierung des Kontaktabschnitts 5 und somit des Bauteils 2 vor dem Anbringen des Bauteils 2 an dem Bauteil 3 auch erreicht werden, dass die bewegte Komponente 10 bodenseitig angeordnet ist oder an der in Fig. 1 dem Betrachter zugewandten oder von diesem abgewandten Seite des Bauteils 2 angeordnet ist.

Die Möglichkeit, die Orientierung des Bauteils 2 bezüglich des Bauteils 3 anzupassen, ermöglicht es somit mit geringem Aufwand, das durch das Bauteil 2 gebildete Modul flexibel für eine Vielzahl von Anwendungszwecken in einer Vielzahl von Vorrichtungen zu nutzen. Im gezeigten Beispiel wird durch geeignete Wahl der Orientierung eine geeignete Position der Komponente 10 bzw. ein geeigneter Bewegungspfad 12 gewählt. Würde in einer nicht gezeigten Abwandlung der Bewegungspfad 12 gewinkelt zur Verbindungsrichtung 7 verlaufen, in der der erste Kontaktabschnitt 5 an den zweiten Kontaktabschnitt 6 angesteckt bzw. angepresst ist, würde eine Veränderung der Orientierung des Kontaktabschnitts 5 und somit des Bauteils 2 auch zu einer Veränderung der Bewegungsrichtung führen. Würde statt einer linearen Bewegung der Komponente 10 eine Rotation oder Verschwenkung der Komponente um eine gewinkelt zur Bewegungsrichtung 7 verlaufende Dreh- bzw. -Schwenkachse erfolgen, könnte deren Richtung ebenfalls durch Wahl dieser Orientierung bestimmt werden.

Die Kontaktabschnitte 5, 6 dienen nicht nur zur mechanischen Halterung bzw. Abstützung der Bauteile 2, 3 aneinander bzw. die mechanische Halterung bzw. Abstützung könnte in einer nicht gezeigten Abwandlung auch auf andere Weise, z.B. über beabstandet von den Kontaktabschnitten 5, 6 angeordnete Stützabschnitte der Bauteile 2, 3, erfolgen. Durch das Anstecken bzw. Anpressen des Kontaktabschnitts 5 an den Kontaktabschnitt 6 wird nämlich primär eine Verbindungsschnittstelle 4 ausgebildet. Diese umfasst einerseits eine elektrische Schnittstelle 8 zur Übertragung von elektrischer Leistung und von Kommunikationssignalen, im Beispiel über das Netzwerk 17, beispielsweise über eine Ethernet-Verbindung, und andererseits eine Fluidschnittstelle 9 zum Fluidtransport zwischen dem ersten und dem zweiten Bauteil 2, 3.

Durch eine geeignete Ausgestaltung der Kontaktabschnitte 5, 6, für die später noch ein Beispiel erläutert werden wird, kann erreicht werden, dass in einer Mehrzahl von möglichen Orientierungen des Kontaktabschnitts 5 bezüglich des Kontaktabschnitts 6 beim Anstecken bzw. Anpressen des Kontaktabschnitts 5 an den Kontaktabschnitt 6 automatisch die Verbindungsschnittstelle ausgebildet wird. Die verschiedenen möglichen Orientierungen unterscheiden sich hierbei ausschließlich bezüglich einer Rotation um die in Fig. 1 in Querrichtung verlaufende Rotationsachse voneinander.

Die Bewegung der Komponente 10 erfolgt durch den Aktor 11 des Bauteils 2, der im Beispiel ein pneumatischer Aktor ist. Alternativ wäre als Aktor z.B. ein elektrischer Antrieb nutzbar. Das Betriebsfluid für den Aktor 11, also Druckluft, wird von einem Kompressor 13 im Bauteil 3 bereitgestellt und dem Aktor 11 über die Fluidschnittstelle 9 und eine weitere Komponente 14 zur Steuerung des Fluidflusses, beispielsweise ein Ventil, zugeführt. Die Komponente 14 wird wiederum elektrisch durch eine Steuereinrichtung 15 gesteuert, die einerseits über eine Stromversorgung 18 im Bauteil 3 über die elektrische Schnittstelle 8 mit Energie versorgt wird und andererseits durch eine zentrale Steuereinrichtung 16 im ersten Bauteil über das Netzwerk 17 gesteuert wird, das ebenfalls über die elektrische Schnittstelle 8 geführt ist.

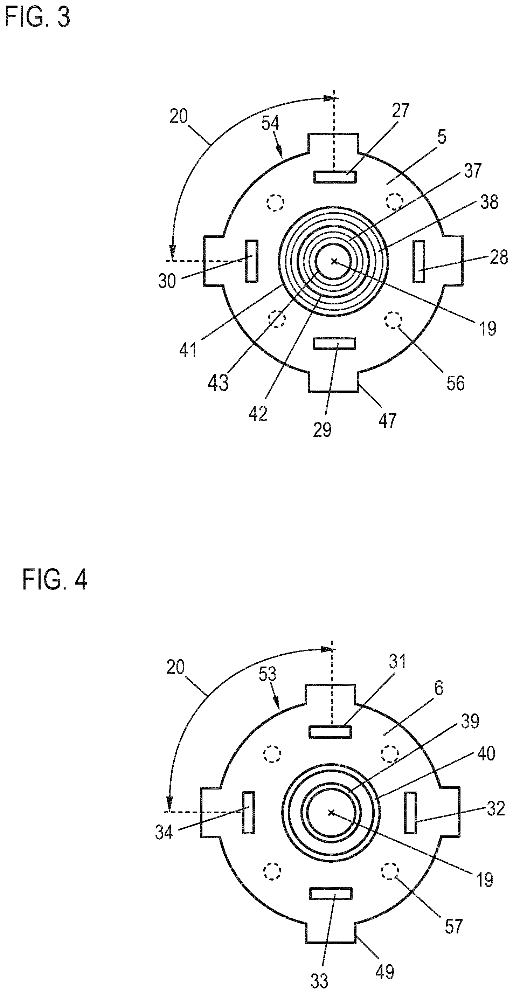

Eine Möglichkeit, die die Verbindungsschnittstelle 4 ausbildenden Kontaktabschnitte 5, 6 auszugestalten, wird im Folgenden mit Bezug auf die Figuren 2 bis 4 genauer erläutert. Hierbei zeigt Fig. 2 schematisch einen Schnitt durch jenen Bereich, in dem die Kontaktabschnitte 5, 6 aneinandergepresst bzw. ineinander eingesteckt sind. Die Figuren 3 und 4 zeigen schematisch Draufsichten auf die Kontaktabschnitte 5, 6. Die in diesen beiden Figuren dem Betrachter zugewandten Flächen werden zur Herstellung der Verbindungsschnittstelle 4 aufeinander zubewegt. Die jeweilige Seitenwand der Kontaktabschnitte 3, 4, die in Fig. 3 bzw. 4 dem Betrachter zugewandt ist, ist in Fig. 2 aus Übersichtlichkeitsgründen nicht dargestellt.

Die am Kontaktabschnitt 5 angebrachten elastischen Rückstellelemente 41, 42, 43, die durch Dichtmittel, nämlich im konkreten Beispiel durch O-Ringe, gebildet sind, werden im verbundenen Zustand der Kontaktabschnitte 5, 6 auf die in Fig. 4 dargestellte Oberfläche des Kontaktabschnitts 6 gepresst. Hierdurch werden einerseits die Fluidkanäle 35, 36 abgedichtet. Zugleich wird hierdurch, wie später noch erläutert wird, das in Fig. 2 und 4 dargestellte Befestigungsmittel 55 kraftschlüssig in einer Befestigungsposition gehaltert.

Wie insbesondere in Fig. 2 gut zu erkennen ist, wird die elektrische Schnittstelle 8 seitens des ersten und zweiten Kontaktabschnitts 5, 6 jeweils durch eine Gruppe 21, 22 von mehreren elektrischen Anschlüssen 23 bis 26 gebildet. Für jeden der Anschlüsse 23 bis 26 sind hierbei mehrere Instanzen 27 bis 34 vorhanden, von denen in Fig. 2 nur jeweils zwei um 180° versetzte Instanzen 27, 29, 31 und 33 dargestellt sind. Hierbei sind alle Instanzen 27 bis 34 eines jeweiligen der Anschlüsse 23 bis 26 leitend miteinander verbunden, so dass es zur Herstellung der elektrischen Schnittstelle letztlich unbedeutend ist, mit welcher der mehreren Instanzen 27 bis 34 des jeweiligen elektrischen Anschlusses 23 bis 26 ein leitender Kontakt hergestellt wird. Prinzipiell wäre es ausreichend, nur an einem der beiden Kontaktabschnitte 5, 6 ein mehrfaches Vorsehen der einzelnen elektrischen Anschlüsse, also mehrere Instanzen, vorzusehen, die leitend miteinander verbunden sind, um verschiedene Orientierungen zu ermöglichen. Im gezeigten Beispiel ist diese Ausgestaltung jedoch für beide Kontaktabschnitte 5, 6 vorgesehen.

Im gezeigten Beispiel wird jeweils genau eine Instanz jedes Anschlusses der Gruppe zu einer jeweiligen Buchse bzw. zu einem jeweiligen Stecker zusammengefasst, wobei aus Übersichtlichkeitsgründen in den Figuren 3 und 4 nur diese Buchsen bzw. dieser Stecker, die jeweils genau eine Instanz jedes Anschlusses der jeweiligen Gruppen umfassen, als Instanzen der elektrischen Anschlüsse 27 bis 34 schematisch dargestellt sind. Da diese Stecker bzw. Buchsen und somit die Instanzen 27 bis 34 der elektrischen Anschlüsse 23 bis 26 jeweils um einen vorgegebenen Winkel 20, im Beispiel um 90°, in Umfangsrichtung der Rotationsachse 19 zueinander versetzt sind, kann der Kontaktabschnitt 5 in mehreren Orientierungen an den Kontaktabschnitt 6 angesteckt bzw. angepresst werden, die sich um ein ganzzahliges Vielfaches des vorgegebenen Winkels 20 unterscheiden, wobei in all diesen Orientierungen die gleiche elektrische Schnittstelle bereitgestellt wird.

Um auch die Fluidschnittstelle unabhängig von der Wahl der Orientierung in den genannten Schritten zu ermöglichen, werden in den Kontaktabschnitten 5, 6 jeweils Teilkanäle 37, 38, 39, 40 genutzt, die im Querschnitt senkrecht zur Rotationsachse 19 bzw. in den in Fig. 3 und 4 gezeigten Draufsichten die Rotationsachse 19 als konzentrische Ringkanäle umgeben. Werden nun die Kontaktabschnitte 5, 6, wie in Fig. 2 dargestellt, aufeinander gesteckt bzw. - gepresst, so bilden die Teilkanäle 37, 39 gemeinsam den Fluidkanal 35 und die Teilkanäle 38, 40 gemeinsam den Fluidkanal 36 aus, wobei die Fluidkanäle 35, 36 durch Dichtringe, die zugleich als elastische Rückstellelemente 41, 42, 43 dienen, abgedichtet sind. Diese Verbindung ist unabhängig davon, welche von mehreren Orientierungen, die sich bezüglich einer Rotation um die Rotationsachse 19 unterscheiden, des Kontaktabschnitts 5 bezüglich des Kontaktabschnitts 6 genutzt wird.

Eine Nutzung von zwei Fluidkanälen 35, 36 kann vorteilhaft sein, um sowohl eine Zufuhr von Arbeitsfluid zum Bauteil 2 als auch eine Abfuhr von Arbeitsfluid zu ermöglichen. Obwohl im gezeigten Beispiel beide Fluidkanäle 35, 36 ringförmig sind, könnte eine solche fluiddichte Verbindung von Teilkanälen unabhängig von einer Orientierung bezüglich einer Rotation um die Rotationsachse 19 auch erreicht werden, wenn beispielsweise ein zentraler, runder Fluidkanal genutzt wird, innerhalb dem die Rotationsachse verläuft.

Um einerseits ein versehentliches Lösen der Verbindungsschnittstelle zu vermeiden und andererseits insbesondere auch eine mechanische Halterung und Abstützung des Bauteils 2 an dem Bauteil 3 zu ermöglichen, können die Befestigungsabschnitte 5, 6, wie in Fig. 2 dargestellt ist, durch ein Befestigungsmittel 55 aneinander befestigt werden.

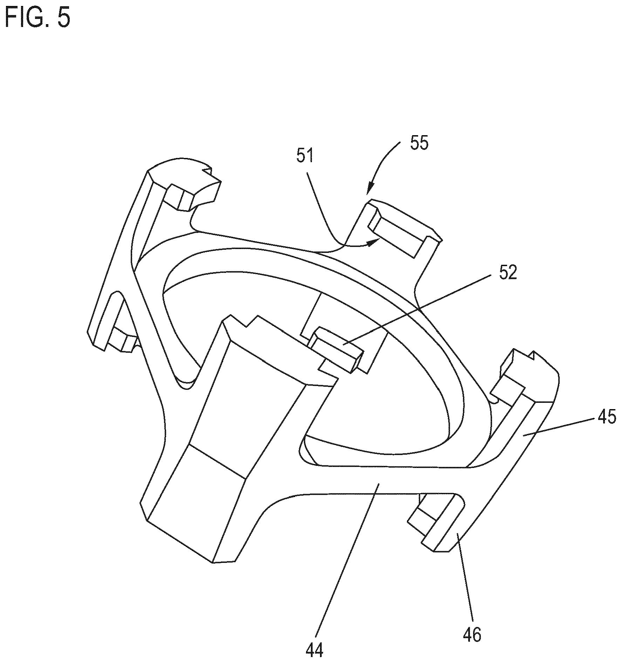

Fig. 5 zeigt eine perspektivische Ansicht einer möglichen Ausgestaltung dieses Befestigungsmittels 55. Das Befestigungsmittel 55 weist einen Grundkörper 44 auf, der die Rotationsachse 19 ringförmig umläuft und von dem in Richtung der beiden Kontaktabschnitte 5, 6 jeweils mehrere in Umfangsrichtung voneinander beabstandete Stege 45, 46 abragen. Die Stege 45 übergreifen hierbei jeweils einen Stützabschnitt 47 des Kontaktabschnitts 5 und greifen an einer Stützfläche 48 dieses Stützabschnitte 47 an, die von dem anderen Kontaktabschnitt 6 abgewandt ist. Entsprechend übergreifen die Stege 46 jeweils einen Stützabschnitt 49 des Kontaktabschnitts 6 und greifen an einer von dem Kontaktabschnitt 5 abgewandten Stützfläche 50 dieses Stützabschnitts 49 an.

Hierdurch wird in der in Fig. 2 dargestellten Befestigungsposition des Befestigungsmittels 55 verhindert, dass die Kontaktabschnitte 5, 6 entgegen der Verbindungsrichtung 7 auseinanderbewegt werden, da die Stützflächen 48, 50 an den Stegflächen 51, 52 anschlagen. Da die Kontaktabschnitte 5, 6 und somit auch die Stützflächen 48, 50 durch die Rückstellelemente 41, 42, 43, die wie erläutert vorliegend Dichtringe sind, auseinander und somit gegen die Stegflächen 51, 52 gepresst werden, resultiert ein Reibschluss zwischen der jeweiligen Stützfläche 48, 50 und der jeweiligen Stegfläche 51, 52.

Das Befestigungsmittel 55 kann als separates Bauteil bereitgestellt oder auch an einem der Bauteile 2, 3 bzw. der Kontaktabschnitte 5, 6 angebracht und dort insbesondere drehbar gelagert sein. Bei einem Anbringen des Befestigungsmittels 55 an einem der Kontaktabschnitte kann in einer nicht gezeigten Abwandlung auch auf jene Stege verzichtet werden, die sich in Richtung dieses Kontaktabschnitts erstrecken.

Bei dem Anbringen des Kontaktabschnitts 5 an dem Kontaktabschnitt 6 wird das Befestigungsmittel 55 zunächst in eine Freigabeposition gebracht, in der senkrecht zur Rotationsachse 19 bzw. zur Verbindungsrichtung 7 betrachtet die Stegabschnitte 51, 52 in den Zwischenräumen 53, 54 zwischen den Stützabschnitten 47, 49 der Kontaktabschnitte 5, 6 liegen. Diese Zwischenräume sind in Fig. 3 und 4 dargestellt. Hierdurch ist das Befestigungsmittel 55 zumindest bezüglich jenes Kontaktabschnitts, an dem es nicht gelagert ist, insbesondere bezüglich beider Kontaktabschnitte, in die Verbindungsrichtung 7 frei beweglich. Die Kontaktabschnitte 5, 6 können somit aufeinandergepresst bzw. aneinandergesteckt werden, ohne dass dieser Vorgang durch das Befestigungsmittel 55 behindert wird.

Anschließend kann das Befestigungsmittel 55 um die Rotationsachse 19 rotiert werden, um die jeweiligen Stegflächen 51, 52 hinter die jeweiligen Stützabschnitte 47, 49 zu schwenken, womit die obig erläuterte Befestigungsposition erreicht wird.

Insbesondere um Toleranzen auszugleichen, kann es vorteilhaft sein, wenn eingestellt werden kann, wie viel Spiel zwischen den Kontaktabschnitten 5, 6 parallel zur Rotationsachse 19 möglich ist bzw. wie stark die Rückstellelemente 41, 42, 43 vorgespannt werden sollen. Dies kann erreicht werden, indem die Stützflächen 48, 50 und/oder die Stegflächen 51, 52 in Umfangsrichtung angeschrägt werden, so dass insbesondere diese Flächen oder zumindest eine dieser Flächen einer Schraubenlinie folgen bzw. folgt. Hierdurch kann durch Einstellung des Rotationswinkels des Befestigungsmittels 55 eingestellt werden, wie sehr die "Schraube" angezogen ist und somit, wie starke Klemmkräfte auf die Kontaktabschnitte 5, 6 wirken bzw. welches Spiel für die Kontaktabschnitte 5, 6 in Verbindungsrichtung 7 verbleibt.

Um einerseits eine gute Zentrierung der Kontaktabschnitte 5, 6 bezüglich der Rotationsachse 19 und somit insbesondere eine robuste Verbindung der Verbindungsschnittstelle 4 zu erreichen und andererseits eine Relativbewegung der Kontaktabschnitte 5, 6 senkrecht zur Rotationsachse und/oder eine relative Rotation um die Rotationsachse 19, die z.B. zu einer Belastung der Stecker und Buchsen der elektrischen Schnittstelle führen kann, zu vermeiden, können optional mehrere Vorsprünge 56 an dem Kontaktabschnitt 5 und gegengleiche Ausnehmungen 57 an dem Kontaktabschnitt 6 genutzt werden, die in den Fig. 3 und 4 gestrichelt dargestellt sind. Hierbei weist die Anordnung der Vorsprünge 56 und Ausnehmungen 57 die gleiche Drehsymmetrie auf wie die Verbindungsschnittstelle 4.

In einer Abwandlung wäre es auch möglich, dass diese Drehsymmetrie nur für die Ausnehmungen 57 gegeben ist und eine geringere Anzahl von Vorsprüngen 56, z.B. nur zwei oder drei der gezeigten Vorsprünge 56, verwendet wird. In diesem Fall würden je nach Orientierung Teile der Ausnehmungen nicht durch Vorsprünge gefüllt.

## Patentansprüche

1. Vorrichtung (1), insbesondere zur Handhabung und/oder Verarbeitung von Teilen, mit einem ersten und einem zweiten Bauteil (2, 3), die über eine Verbindungsschnittstelle (4) trennbar verbunden oder verbindbar sind, wobei die Verbindungsschnittstelle (4) durch ein Anstecken und/oder Anpressen eines ersten Kontaktabschnitts (5) des ersten Bauteils (2) in eine Verbindungsrichtung (7) an einen zweiten Kontaktabschnitts (6) des zweiten Bauteils (3) mit einer bezüglich des zweiten Kontaktabschnitts (6) vorgegebenen ersten Orientierung resultiert, wobei die Verbindungsschnittstelle (4) einerseits eine elektrische Schnittstelle (8) zur Übertragung elektrischer Leistung und/oder von Kommunikationssignalen zwischen dem ersten und dem zweiten Bauteil (2, 3) und andererseits eine Fluidschnittstelle (9) zum Fluidtransport zwischen dem ersten und dem zweiten Bauteil (2, 3) umfasst, wobei der erste und der zweite Kontaktabschnitt (5, 6) derart ausgebildet sind, dass auch bei einem Anstecken oder Anpressen des ersten Kontaktabschnitts (5) in die Verbindungsrichtung (7) an den zweiten Kontaktabschnitt (6) mit wenigstens einer weiteren Orientierung die Verbindungsschnittstelle (4) resultiert, wobei die jeweilige weitere Orientierung abgesehen von einer Rotation des ersten Kontaktabschnitts (6) um eine in Verbindungsrichtung (7) verlaufende Rotationsachse (19) um einen jeweiligen vorgegebenen Winkel (20) der ersten Orientierung entspricht, **dadurch gekennzeichnet, dass** der erste und zweite Kontaktabschnitt (5, 6) durch ein Befestigungsmittel (55) miteinander verbunden sind, das einen Grundkörper (44), der die Rotationsachse ringförmig umläuft, und jeweils mehrere von dem Grundkörper (44) abstehende erste und/oder zweite Stege (45, 46) umfasst, wobei die ersten Stege (45) jeweils einen Stützabschnitt (47) des ersten Kontaktabschnitts (5) übergreifen und an einer von dem zweiten Kontaktabschnitt (6) abgewandten Stützfläche (48) dieses Stützabschnitts (47) angreifen und die zweiten Stege (46) jeweils einen Stützabschnitt (49) des zweiten Kontaktabschnitts (6) übergreifen und an einer von dem ersten Kontaktabschnitt (5) abgewandten Stützfläche (50) dieses Stützabschnitts (49) angreifen, um eine Auseinanderbewegung der Kontaktabschnitte (5, 6) in Verbindungsrichtung (7) zu begrenzen, wobei wenn das Befestigungsmittel (55) lediglich erste oder zweite Stege (45, 46) umfasst, das Befestigungsmittel (55) an dem Kontaktabschnitt (5, 6) angebracht ist in dessen Richtung sich keine Stege erstrecken.

2. Vorrichtung nach Anspruch 1, **dadurch gekennzeichnet, dass** die elektrische Schnittstelle (8) seitens des ersten und zweiten Kontaktabschnitts (5, 6) jeweils durch eine Gruppe (21, 22) von mehreren elektrischen Anschlüssen (23 - 26) gebildet ist, wobei an dem ersten und/oder zweiten Kontaktabschnitt (5, 6) für jeden der Anschlüsse (23 - 26) der Gruppe (21, 22) mehrere Instanzen (27 - 34) vorhanden sind, wobei die Instanzen (27 - 34) eines jeweiligen Anschlusses (23 - 26) leitend miteinander verbunden sind und im verbundenen Zustand der Kontaktabschnitte (5, 6) beabstandet voneinander auf einer jeweiligen Kreisbahn um die Rotationsachse angeordnet sind.

3. Vorrichtung nach Anspruch 1 oder 2, **dadurch gekennzeichnet, dass** die Fluidschnittstelle (9) wenigstens einen Fluidkanal (35, 36) umfasst, der durch eine fluiddichte Verbindung eines jeweiligen ersten Teilkanals (37, 38) des ersten Kontaktabschnitts (5) und eines jeweiligen zweiten Teilkanals (39, 40) des zweiten Kontaktabschnitts (6) gebildet ist, wobei zumindest im Bereich der fluiddichten Verbindung der Fluidkanal (35, 36) oder wenigstens einer der Fluidkanäle (36, 36) im Querschnitt senkrecht zur Verbindungsrichtung (7) betrachtet die Rotationsachse (19) ringförmig umgibt und/oder wobei die Rotationsachse (19) innerhalb des Fluidkanals (35, 36) oder eines der Fluidkanäle (35, 36) verläuft.

4. Vorrichtung nach Anspruch 3, wobei die Fluidschnittstelle (9) mehrere, insbesondere zwei, der Fluidkanäle (35, 36) umfasst, **dadurch gekennzeichnet, dass** die Fluidkanäle (35, 36) zumindest im Bereich der fluiddichten Verbindung senkrecht zur Verbindungsrichtung (7) betrachtet die Rotationsachse (19) als koaxiale Ringe umgeben.

5. Vorrichtung nach einem der vorangehenden Ansprüche, **dadurch gekennzeichnet, dass** die jeweiligen Stützabschnitte (47, 49) des ersten und/oder des zweiten Kontaktabschnitts (5, 6) in Umfangsrichtung der Rotationsachse (19) voneinander beabstandet sind und/oder dass die Stützflächen (48, 50) der Stützabschnitte (47, 49) des ersten und/oder des zweiten Kontaktabschnitts (5, 6) und/oder die die Stützflächen (48, 50) kontaktierenden Stegfläche (51, 52) der ersten und/oder zweiten Stege (45, 46) in Umfangsrichtung angeschrägt sind.

6. Vorrichtung nach einem der vorangehenden Ansprüche, **dadurch gekennzeichnet, dass** das Befestigungsmittel (55) derart eingerichtet ist, dass durch eine Drehung des ringförmigen Grundkörpers (44) um die Rotationsachse (19) eine Anpresskraft, mit der die Kontaktabschnitte (5, 6) aufeinander gepresst werden, veränderbar ist und/oder dass durch diese Drehung einstellbar ist, ob und/oder nach einem wie großen Verstellweg entgegen der Verbindungsrichtung (7) eine weitere Auseinanderbewegung der Kontaktabschnitte (5, 6) durch einen Anschlag der oder einer Stegfläche (51, 52) wenigstens eines der Stege (45, 46) an wenigstens einer der Stützflächen (48, 50) blockiert wird.

7. Vorrichtung nach einem der vorangehenden Ansprüche, **dadurch gekennzeichnet, dass** zwischen den Kontaktabschnitten (5, 6) ein elastisch verformtes Rückstellelement (41, 42, 43) angeordnet ist, dass den ersten Kontaktabschnitt (5) mit einer Rückstellkraft in Richtung von dem zweiten Kontaktabschnitt (6) weg beaufschlagt.

8. Vorrichtung nach einem der vorangehenden Ansprüche, **dadurch gekennzeichnet, dass** der erste und/oder der zweite Kontaktabschnitt (5, 6) mehrere Ausnehmungen (57) aufweisen, in die jeweils, zumindest in der und/oder der weiteren Orientierung, ein jeweiliger, insbesondere stiftartiger, Vorsprung (56) des jeweils anderen Kontaktabschnitts (5, 6) eingreift, der sich parallel zur Rotationsachse (19) erstreckt.

9. Vorrichtung nach einem der vorangehenden Ansprüche, **dadurch gekennzeichnet, dass** wenigstens eines der Bauteile (2, 3) einen Aktor (11) umfasst, der dazu eingerichtet ist, eine bezüglich des Kontaktabschnitts (5, 6) dieses Bauteils beweglich gelagerte Komponente (10) zu bewegen, wobei eine Richtung der Bewegung und/oder einer Dreh- oder Schwenkachse der Bewegung und/oder ein Bewegungspfad (12) der Komponente (10) davon abhängt, ob der erste Kontaktabschnitt (5) mit der oder der weiteren Orientierung an den zweiten Kontaktabschnitt (6) angesteckt und/oder angepresst ist.

10. Vorrichtung nach Anspruch 9, **dadurch gekennzeichnet, dass** der Aktor (11) ein pneumatischer oder hydraulischer Aktor (11) ist, wobei die Vorrichtung (1) derart eingerichtet ist, dass zum Betrieb des pneumatischen oder hydraulischen Aktors (11) genutztes Betriebsfluid über die Fluidverbindung (9) zu diesem Bauteil (2, 3) geführt und/oder von diesem Bauteil (2, 3) abgeführt wird.

11. Vorrichtung nach einem der vorangehenden Ansprüche, **dadurch gekennzeichnet, dass** wenigstens eines der Bauteile (2, 3) einen pneumatischen oder hydraulischen Aktor (11) umfasst, wobei die Vorrichtung (1) derart eingerichtet ist, dass zum Betrieb des pneumatischen oder hydraulischen Aktors (11) genutztes Betriebsfluid über die Fluidverbindung (9) zu diesem Bauteil (2, 3) geführt und/oder von diesem Bauteil (2, 3) abgeführt wird.

12. Vorrichtung nach einem der vorangehenden Ansprüche, **dadurch gekennzeichnet, dass** wenigstens eines der Bauteile (2, 3) den oder einen Aktor (11) umfasst, wobei die Vorrichtung (1) derart eingerichtet ist, dass Steuersignale zur Steuerung des Aktors (11) als Kommunikationssignale und/oder Leistung zum Betrieb des Aktors (11), insbesondere zum Betrieb eines als Aktor genutzten elektrischen Antriebs, über die elektrische Schnittstelle (8) zu diesem Bauteil (2, 3) übertragbar sind.

13. Vorrichtung nach einem der vorangehenden Ansprüche, **dadurch gekennzeichnet, dass** ein Bus oder Netzwerk (17) über die elektrische Schnittstelle (9) geführt ist.

14. Verfahren zur Verbindung eines ersten Bauteils (2) mit einem zweiten Bauteil (3) in einer Vorrichtung (1), insbesondere in einer Vorrichtung (1) zur Handhabung und/oder Verarbeitung von Teilen, wobei das erste und zweite Bauteil (2, 3) über eine Verbindungsschnittstelle (4) verbunden werden, indem ein erster Kontaktabschnitt (5) des ersten Bauteils (2) in eine Verbindungsrichtung (7) an einen zweiten Kontaktabschnitt (6) des zweiten Bauteils (3) mit einer bezüglich des zweiten Kontaktabschnitts (6) vorgegebenen Orientierung angesteckt und/oder angepresst wird, wobei die Verbindungsschnittstelle (4) einerseits eine elektrische Schnittstelle (8) zur Übertragung elektrischer Leistung und/oder von Kommunikationssignalen zwischen dem ersten und dem zweiten Bauteil (2, 3) und andererseits eine Fluidschnittstelle (9) zum Fluidtransport zwischen dem ersten und dem zweiten Bauteil (2, 3) umfasst, wobei ein erster und zweiter Kontaktabschnitt (5, 6) verwendet werden, die derart ausgebildet sind, dass für mehrere mögliche Orientierungen des ersten Kontaktabschnitts (5) bezüglich des zweiten Kontaktabschnitts (6), die sich ausschließlich bezüglich einer Rotation des ersten Kontaktabschnitts (5) um eine in Verbindungsrichtung (7) verlaufende Rotationsachse (19) um einen vorgegebenen Winkel (20) voneinander unterschieden, bei einem Anstecken oder Anpressen des ersten Kontaktabschnitts (5) in die Verbindungsrichtung (7) an den zweiten Kontaktabschnitt (6) in der jeweiligen möglichen Orientierung die Verbindungsschnittstelle (4) resultiert, wobei eine der möglichen Orientierungen als die vorgegebene Orientierung verwendet wird, **dadurch gekennzeichnet, dass** die Kontaktabschnitte (5, 6) durch ein Befestigungsmittel (55) aneinander befestigt werden, das einen Grundkörper (44), der die Rotationsachse (19) ringförmig umläuft, und jeweils mehrere von dem Grundkörper (44) abstehende erste und/oder zweite Stege (45, 46) umfasst, wobei wenn das Befestigungsmittel (55) lediglich erste oder zweite Stege (45, 46) umfasst, das Befestigungsmittel (55) an dem Kontaktabschnitt (5, 6) angebracht ist in dessen Richtung sich keine Stege erstrecken, wobei die Befestigung durch eine Rotation des Befestigungsmittels (55) aus einer Freigabeposition in eine Befestigungsposition erfolgt, wobei in der Befestigungsposition die ersten Stege (45) jeweils einen Stützabschnitt (47) des ersten Kontaktabschnitts (5) übergreifen und eine jeweilige Stegfläche (51) des jeweiligen ersten Stegs (45) an einer von dem zweiten Kontaktabschnitt (6) abgewandten Stützfläche (48) dieses Stützabschnitts (47) angreift und die zweiten Stege (46) jeweils einen Stützabschnitt (49) des zweiten Kontaktabschnitts (6) übergreifen und eine jeweilige Stegfläche (52) des jeweiligen zweiten Stegs (46) an einer von dem ersten Kontaktabschnitt (5) abgewandten Stützfläche (50) dieses Stützabschnitts (49) angreift, wobei die jeweiligen Stützabschnitte (47, 49) des ersten und/oder des zweiten Kontaktabschnitts (5, 6) in Umfangsrichtung der Rotationsachse (19) durch Zwischenräume (53, 54) voneinander beabstandet sind, wobei in der Freigabeposition die Stegflächen (51, 52) der ersten und/oder der zweiten Stege (45, 46) senkrecht zur Rotationsachse (19) betrachtet in den Zwischenräumen (53, 54) angeordnet sind.

15. Verfahren nach Anspruch 14, **dadurch gekennzeichnet, dass** bei dem Anstecken oder Anpressen des ersten Kontaktabschnitts (5) in die Verbindungsrichtung (7) an den zweiten Kontaktabschnitt (6) die jeweilige Stegfläche (51, 52) durch einen jeweiligen der Zwischenräume (53, 54) geführt wird.

## Claims

1. Device (1), in particular for the handling and/or processing of parts, having a first and a second subassembly (2, 3) which are separably connected or connectable by means of a connection interface (4), wherein the connection interface (4) results from a first contact section (5) of the first subassembly (2) being plugged and/or pressed in a connecting direction (7) onto a second contact section (6) of the second subassembly (3) in a first orientation that is specified relative to the second contact section (6), wherein the connection interface (4) comprises firstly an electrical interface (8) for the transmission of electrical power and/or of communication signals between the first and the second subassembly (2, 3) and secondly a fluid interface (9) for the transport of fluid between the first and the second subassembly (2, 3), wherein the first and the second contact section (5, 6) are configured such that the connection interface (4) also results if the first contact section (5) is plugged or pressed in the connecting direction (7) onto the second contact section (6) in at least one further orientation, wherein the respective further orientation corresponds to the first orientation aside from a rotation of the first contact section (6) by a respective specified angle (20) about a rotation axis (19) running in the connecting direction (7), **characterized in that** the first and second contact sections (5, 6) are connected to one another by a fastening means (55) which comprises a main body (44), which annularly encircles the rotation axis, and in each case multiple first and/or second webs (45, 46) which project from the main body (44), wherein the first webs (45) engage over in each case one support section (47) of the first contact section (5) and engage on a support surface (48) of said support section (47), which support surface (48) is averted from the second contact section (6), and the second webs (46) engage over in each case one support section (49) of the second contact section (6) and engage on a support surface (50) of said support section (49), which support surface (50) is averted from the first contact section (5), in order to limit a movement of the contact sections (5, 6) apart in a connecting direction (7), wherein, when the fastening means (55) comprises only first or second webs (45, 46), the fastening means (55) is attached to the contact section (5, 6) in the direction of which no webs extend.

2. Device according to Claim 1, **characterized in that** the electrical interface (8) is formed on the first and second contact section (5, 6) in each case by a group (21, 22) of multiple electrical connections (23 - 26), wherein multiple instances (27 - 34) are provided for each of the connections (23 - 26) of the group (21, 22) on the first and/or second contact section (5, 6), wherein the instances (27 - 34) of a respective connection (23 - 26) are conductively connected to one another and are arranged spaced apart from one another on a respective circular path about the rotation axis when the contact sections (5, 6) are in the connected state.

3. Device according to Claim 1 or 2, **characterized in that** the fluid interface (9) comprises at least one fluid channel (35, 36) that is formed by a fluid-tight connection of a respective first partial channel (37, 38) of the first contact section (5) and a respective second partial channel (39, 40) of the second contact section (6), wherein, at least in the region of the fluid-tight connection, the fluid channel (35, 36) or at least one of the fluid channels (36, 36) annularly surrounds the rotation axis (19) as viewed in a cross section perpendicular to the connecting direction (7), and/or wherein the rotation axis (19) runs within the fluid channel (35, 36) or one of the fluid channels (35, 36).

4. Device according to Claim 3, wherein the fluid interface (9) comprises several, in particular two, of the fluid channels (35, 36), **characterized in that**, at least in the region of the fluid-tight connection, the fluid channels (35, 36) surround the rotation axis (19) as coaxial rings as viewed perpendicular to the connecting direction (7).

5. Device according to any one of the preceding claims, **characterized in that** the respective support sections (47, 49) of the first and/or of the second contact section (5, 6) are spaced apart from one another in a circumferential direction of the rotation axis (19), and/or **in that** the support surfaces (48, 50) of the support sections (47, 49) of the first and/or of the second contact section (5, 6) and/or those web surfaces (51, 52) of the first and/or second webs (45, 46) which make contact with the support surfaces (48, 50) are bevelled in a circumferential direction.

6. Device according to any one of the preceding claims, **characterized in that** the fastening means (55) are configured such that a pressing force with which the contact sections (5, 6) are pressed against one another is variable by way of a rotation of the annular main body (44) about the rotation axis (19), and/or that, by way of said rotation, it is possible to set whether, and/or after how great a displacement travel counter to the connecting direction (7), a further movement of the contact sections (5, 6) apart is blocked by an abutment of the or a web surface (51, 52) of at least one of the webs (45, 46) against at least one of the support surfaces (48, 50) .

7. Device according to any one of the preceding claims, **characterized in that**, between the contact sections (5, 6), there is arranged an elastically deformable restoring element (41, 42, 43) which subjects the first contact section (5) to a restoring force in a direction away from the second contact section (6).

8. Device according to any one of the preceding claims, **characterized in that** the first and/or the second contact section (5, 6) have multiple recesses (57) into each of which, at least in the and/or the further orientation, a respective, in particular pin-like projection (56), which extends parallel to the rotation axis (19), of the respective other contact section (5, 6) engages.

9. Device according to any one of the preceding claims, **characterized in that** at least one of the subassemblies (2, 3) comprises an actuator (11) that is configured to move a component (10) that is mounted so as to be movable with respect to the contact section (5, 6) of said subassembly, wherein a direction of the movement and/or of a rotation or pivot axis of the movement and/or a movement path (12) of the component (10) is dependent on whether the first contact section (5) has been plugged and/or pressed in the or the further orientation onto the second contact section (6).

10. Device according to Claim 9, **characterized in that** the actuator (11) is a pneumatic or hydraulic actuator (11), wherein the device (1) is configured such that operating fluid used for the operation of the pneumatic or hydraulic actuator (11) is conducted to said subassembly (2, 3) and/or discharged from said subassembly (2, 3) via the fluid connection (9).

11. Device according to any one of the preceding claims, **characterized in that** at least one of the subassemblies (2, 3) comprises a pneumatic or hydraulic actuator (11), wherein the device (1) is configured such that operating fluid used for the operation of the pneumatic or hydraulic actuator (11) is conducted to said subassembly (2, 3) and/or discharged from said subassembly (2, 3) via the fluid connection (9).

12. Device according to any one of the preceding claims, **characterized in that** at least one of the subassemblies (2, 3) comprises the or an actuator (11), wherein the device (1) is configured such that control signals for the control of the actuator (11) in the form of communication signals and/or power for the operation of the actuator (11), in particular for the operation of an electric drive used as an actuator, can be transmitted via the electrical interface (8) to said subassembly (2, 3).

13. Device according to any one of the preceding claims, **characterized in that** a bus or network (17) is led via the electrical interface (9).

14. Method for connecting a first subassembly (2) to a second subassembly (3) in a device (1), in particular in a device (1) for the handling and/or processing of parts, wherein the first and second subassembly (2, 3) are connected by means of a connection interface (4) by virtue of a first contact section (5) of the first subassembly (2) being plugged and/or pressed in a connecting direction (7) onto a second contact section (6) of the second subassembly (3) in an orientation that is specified relative to the second contact section (6), wherein the connection interface (4) comprises firstly an electrical interface (8) for the transmission of electrical power and/or of communication signals between the first and the second subassembly (2, 3) and secondly a fluid interface (9) for the transport of fluid between the first and the second subassembly (2, 3), wherein a first and a second contact section (5, 6) are used which are configured such that, for multiple possible orientations of the first contact section (5) with respect to the second contact section (6), which orientations differ from one another exclusively in terms of a rotation of the first contact section (5) by a specified angle (20) about a rotation axis (19) running in the connecting direction (7), the connection interface (4) results when the first contact section (5) is plugged or pressed in the connecting direction (7) onto the second contact section (6) in the respective possible orientation, wherein one of the possible orientations is used as the specified orientation, **characterized in that** the contact sections (5, 6) are fastened to one another by a fastening means (55) comprising a main body (44), which annularly encircles the rotation axis (19), and comprising in each case multiple first and/or second webs (45, 46) which project from the main body (44), wherein, when the fastening means (55) comprises only first or second webs (45, 46), the fastening means (55) is attached to the contact section (5, 6) in the direction of which no webs extend, wherein the fastening is performed by way of a rotation of the fastening means (55) from a release position into a fastening position, wherein, in the fastening position, the first webs (45) engage over in each case one support section (47) of the first contact section (5) and a respective web surface (51) of the respective first web (45) engages on a support surface (48) of said support section (47), which support surface (48) is averted from the second contact section (6), and the second webs (46) engage over in each case one support section (49) of the second contact section (6) and a respective web surface (52) of the respective second web (46) engages on a support surface (50) of said support section (49), which support surface (50) is averted from the first contact section (5), wherein the respective support sections (47, 49) of the first and/or of the second contact section (5, 6) are spaced apart from one another in a circumferential direction of the rotation axis (19) by intermediate spaces (53, 54), wherein, in the release position, the web surfaces (51, 52) of the first and/or of the second webs (45, 46) are arranged in the intermediate spaces (53, 54) as viewed perpendicular to the rotation axis (19).

15. Method according to Claim 14, **characterized in that**, as the first contact section (5) is plugged or pressed in the connecting direction (7) onto the second contact section (6), the respective web surface (51, 52) is guided through a respective one of the intermediate spaces (53, 54).

## Revendications

1. Dispositif (1), en particulier pour la manipulation et/ou le traitement de pièces, pourvu d'un premier et d'un deuxième composant (2, 3), lesquels sont raccordés ou peuvent être raccordés de manière séparable par l'intermédiaire d'une interface de raccordement (4), l'interface de raccordement (4) résultant d'un enfichage et/ou d'une pression d'une première partie de contact (5) du premier composant (2) dans une direction de raccordement (7) sur une deuxième partie de contact (6) du deuxième composant (3) avec une première orientation prédéterminée par rapport à la deuxième partie de contact (6), l'interface de raccordement (4) comprenant d'une part une interface électrique (8) pour la transmission de puissance électrique et/ou de signaux de communication entre les premier et deuxième composants (2, 3) et d'autre part, une interface fluidique (9) pour le transport de fluide entre les premier et deuxième composants (2, 3), les première et deuxième parties de contact (5, 6) étant conçues de telle sorte que, lorsque la première partie de contact (5) est enfichée ou pressée dans la direction de raccordement (7) contre la deuxième partie de contact (6) avec au moins une autre orientation, l'interface de raccordement (4) est obtenue, l'autre orientation respective correspondant à la première orientation, à l'exception d'une rotation de la première partie de contact (6) autour d'un axe de rotation (19) s'étendant dans la direction de raccordement (7), d'un angle prédéterminé (20) respectif, **caractérisé en ce que** les première et deuxième parties de contact (5, 6) sont raccordées l'une à l'autre par un moyen de fixation (55) qui comprend un corps de base (44) entourant l'axe de rotation de manière annulaire, et respectivement plusieurs premières et/ou deuxièmes nervures (45, 46) faisant saillie par rapport au corps de base (44), les premières nervures (45) s'étendant respectivement sur une partie de support (47) de la première partie de contact (5) et s'engageant sur une surface de support (48) de cette partie de support (47), tournée à l'opposé de la deuxième partie de contact (6), et les deuxièmes nervures (46) s'étendant respectivement sur une partie de support (49) de la deuxième partie de contact (6) et s'engageant sur une surface de support (50) de cette partie de support (49), tournée à l'opposé de la première partie de contact (5), afin de limiter un mouvement d'écartement des parties de contact (5, 6) dans la direction de raccordement (7), dans lequel, lorsque le moyen de fixation (55) comprend uniquement des premières ou deuxièmes nervures (45, 46), le moyen de fixation (55) est fixé à la partie de contact (5, 6) dans une direction dans laquelle aucune nervure ne s'étend.

2. Dispositif selon la revendication 1, **caractérisé en ce que** l'interface électrique (8) est formée respectivement, du côté des première et deuxième parties de contact (5, 6), par un groupe (21, 22) de plusieurs connexions électriques (23 - 26), plusieurs instances (27 - 34) étant présentes sur la première et/ou la deuxième partie de contact (5, 6) pour chacune des connexions (23 - 26) du groupe (21, 22), les instances (27 - 34) d'une partie de contact (23 - 26) respective étant raccordées les unes aux autres de manière conductrice et étant disposées, à l'état raccordé des parties de contact (5, 6), à distance les unes des autres sur un trajet circulaire respectif autour de l'axe de rotation.

3. Dispositif selon la revendication 1 ou 2, **caractérisé en ce que** l'interface fluidique (9) comprend au moins un canal fluidique (35, 36) qui est formé par un raccordement étanche aux fluides d'une première partie de canal (37, 38) respective de la première partie de contact (5) et d'une deuxième partie de canal (39, 40) respective de la deuxième partie de contact (6), au moins dans la zone du raccordement étanche aux fluides, le canal fluidique (35, 36) ou au moins l'un des canaux fluidiques (36, 36), vu en coupe transversale perpendiculairement à la direction de raccordement (7), entourant l'axe de rotation (19) de manière annulaire et/ou l'axe de rotation (19) s'étendant à l'intérieur du canal fluidique (35, 36) ou de l'un des canaux fluidiques (35, 36).

4. Dispositif selon la revendication 3, dans lequel l'interface fluidique (9) comprend plusieurs, en particulier deux, des canaux fluidiques (35, 36), **caractérisé en ce que** les canaux fluidiques (35, 36), vus perpendiculairement à la direction de raccordement (7), entourent l'axe de rotation (19) sous forme d'anneaux coaxiaux, au moins dans la zone du raccordement étanche aux fluides.

5. Dispositif selon l'une quelconque des revendications précédentes, **caractérisé en ce que** les parties de support (47, 49) respectives de la première et/ou de la deuxième partie de contact (5, 6) sont espacées l'une de l'autre dans la direction circonférentielle de l'axe de rotation (19) et/ou **en ce que** les surfaces de support (48, 50) des parties de support (47, 49) de la première et/ou de la deuxième partie de contact (5, 6) et/ou les surfaces de nervures (51, 52) des premières et/ou des deuxièmes nervures (45, 46) en contact avec les surfaces de support (48, 50) sont biseautées dans la direction circonférentielle.

6. Dispositif selon l'une quelconque des revendications précédentes, **caractérisé en ce que** le moyen de fixation (55) est conçu de telle sorte que, par une rotation du corps de base annulaire (44) autour de l'axe de rotation (19), une force de pression avec laquelle les parties de contact (5, 6) sont pressées l'une contre l'autre peut être modifiée et/ou **en ce que**, par cette rotation, il est possible de régler si et/ou, après une course de réglage d'une certaine valeur en sens opposé à la direction de raccordement (7), un mouvement d'écartement supplémentaire des parties de contact (5, 6) est bloqué par une butée de la ou d'une surface de nervure (51, 52) d'au moins l'une des nervures (45, 46) sur au moins l'une des surfaces de support (48, 50).

7. Dispositif selon l'une quelconque des revendications précédentes, **caractérisé en ce qu'**un élément de rappel (41, 42, 43) déformé élastiquement est disposé entre les parties de contact (5, 6), de manière à appliquer sur la première partie de contact (5) une force de rappel dans une direction d'éloignement par rapport à la deuxième partie de contact (6).

8. Dispositif selon l'une quelconque des revendications précédentes, **caractérisé en ce que** les première et/ou deuxième parties de contact (5, 6) présentent plusieurs évidements (57) dans lesquels s'engage respectivement, au moins selon l'orientation et/ou l'autre orientation, une saillie (56) respective, notamment en forme de tige, de l'autre partie de contact (5, 6) respective, qui s'étend parallèlement à l'axe de rotation (19).

9. Dispositif selon l'une quelconque des revendications précédentes, **caractérisé en ce qu'**au moins l'un des composants (2, 3) comprend un actionneur (11) qui est conçu pour déplacer un composant (10) monté mobile par rapport à la partie de contact (5, 6) de ce composant, une direction du mouvement et/ou un axe de rotation ou de pivotement du mouvement et/ou un trajet de déplacement (12) du composant (10) dépendant du fait que la première partie de contact (5) est ou non enfichée et/ou pressée contre la deuxième partie de contact (6) selon ladite ou l'autre orientation.

10. Dispositif selon la revendication 9, **caractérisé en ce que** l'actionneur (11) est un actionneur pneumatique ou hydraulique (11), le dispositif (1) étant conçu de telle sorte que le fluide de fonctionnement utilisé pour le fonctionnement de l'actionneur pneumatique ou hydraulique (11) est acheminé vers ce composant (2, 3) et/ou expulsé de ce composant (2, 3) par l'intermédiaire du raccordement fluidique (9).

11. Dispositif selon l'une quelconque des revendications précédentes, **caractérisé en ce qu'**au moins l'un des composants (2, 3) comprend un actionneur pneumatique ou hydraulique (11), le dispositif (1) étant conçu de telle sorte que le fluide de fonctionnement utilisé pour le fonctionnement de l'actionneur pneumatique ou hydraulique (11) est acheminé vers ce composant (2, 3) et/ou expulsé de ce composant (2, 3) par l'intermédiaire du raccordement fluidique (9).

12. Dispositif selon l'une quelconque des revendications précédentes, **caractérisé en ce qu'**au moins l'un des composants (2, 3) comprend ledit ou un actionneur (11), le dispositif (1) étant conçu de telle sorte que des signaux de commande destinés à commander l'actionneur (11) peuvent être transmis à ce composant (2, 3) par l'intermédiaire de l'interface électrique (8), en tant que signaux de communication et/ou que puissance destinée au fonctionnement de l'actionneur (11), notamment au fonctionnement d'un entraînement électrique utilisé comme actionneur.

13. Dispositif selon l'une quelconque des revendications précédentes, **caractérisé en ce qu'**un bus ou un réseau (17) est acheminé par l'intermédiaire de l'interface électrique (9).

14. Procédé de raccordement d'un premier composant (2) à un deuxième composant (3) dans un dispositif (1), en particulier dans un dispositif (1) de manipulation et/ou de traitement de pièces, les premier et deuxième composants (2, 3) étant raccordés par l'intermédiaire d'une interface de raccordement (4), en enfichant et/ou en pressant une première partie de contact (5) du premier composant (2) dans une direction de raccordement (7) sur une deuxième partie de contact (6) du deuxième composant (3) avec une orientation prédéterminée par rapport à la deuxième partie de contact (6), l'interface de raccordement (4) comprenant d'une part une interface électrique (8) pour la transmission de puissance électrique et/ou de signaux de communication entre les premier et deuxième composants (2, 3) et d'autre part, une interface fluidique (9) pour le transport de fluide entre les premier et deuxième composants (2, 3), des première et deuxième parties de contact (5, 6) étant utilisées et étant conçues de telle sorte que, pour plusieurs orientations possibles de la première partie de contact (5) par rapport à la deuxième partie de contact (6), qui se distinguent les unes des autres exclusivement en ce qui concerne une rotation de la première partie de contact (5) autour d'un axe de rotation (19) s'étendant dans la direction de raccordement (7) d'un angle prédéterminé (20), lorsque la première partie de contact (5) est enfichée ou pressée dans la direction de raccordement (7) contre la deuxième partie de contact (6), l'interface de raccordement (4) est obtenue selon l'orientation possible respective, l'une des orientations possibles étant utilisée en tant qu'orientation prédéterminée, **caractérisé en ce que** les parties de contact (5, 6) sont fixées l'une à l'autre par un moyen de fixation (55) qui comprend un corps de base (44) entourant l'axe de rotation (19) de manière annulaire, et respectivement plusieurs premières et/ou deuxièmes nervures (45, 46) faisant saillie par rapport au corps de base (44), dans lequel, lorsque le moyen de fixation (55) comprend uniquement des premières ou des deuxièmes nervures (45, 46), le moyen de fixation (55) est monté sur la partie de contact (5, 6) dans une direction dans laquelle aucune nervure ne s'étend, la fixation étant effectuée par une rotation du moyen de fixation (55) d'une position de libération à une position de fixation, dans la position de fixation, les premières nervures (45) s'étendent respectivement sur une partie de support (47) de la première partie de contact (5) et une surface de nervure (51) respective de la première nervure (45) respective s'engage sur une surface de support (48) de cette partie de support (47), tournée à l'opposé de la deuxième partie de contact (6) et les deuxièmes nervures (46) s'étendent respectivement sur une partie de support (49) de la deuxième partie de contact (6) et une surface de nervure respective (52) de la deuxième nervure respective (46) s'engage sur une surface de support (50) de cette partie de support (49), tournée à l'opposé de la première partie de contact (5), les parties de support (47, 49) respectives de la première et/ou de la deuxième partie de contact (5, 6) étant espacées les unes des autres par des espaces intermédiaires (53, 54) dans la direction circonférentielle de l'axe de rotation (19), les surfaces de nervures (51, 52) des premières et/ou des deuxièmes nervures (45, 46) étant, dans la position de libération, disposées dans les espaces intermédiaires (53, 54), vus perpendiculairement à l'axe de rotation (19).

15. Procédé selon la revendication 14, **caractérisé en ce que**, lors de l'enfichage ou du pressage de la première partie de contact (5) dans la direction de raccordement (7) contre la deuxième partie de contact (6), la surface de nervure (51, 52) respective est guidée à travers l'un respectif des espaces intermédiaires (53, 54).
